# EUROPEAN PATENT SPECIFICATION

(11) **EP 3 557 709 B1**
(45) Date of publication and mention of the grant of the patent: **15.12.2021**
(21) Application number: 18168129.7
(22) Date of filing: 19.04.2018
(51) Int. Cl.: H02G 3/08, H02G 3/06, H02G 3/12

(54) **INTERCONNECTOR ELEMENT AND ELECTRICAL INSTALLATION BOX ASSEMBLIES COMPRISING THE SAME**
VERBINDUNGSELEMENT UND ELEKTROINSTALLATIONSDOSENANORDNUNGEN DAMIT
ÉLÉMENT D'INTERCONNEXION ET ENSEMBLES DE BOÎTE D'INSTALLATION ÉLECTRIQUE LE COMPRENANT

(43) Date of publication of application: 23.10.2019
(73) Proprietor: ABB Schweiz AG, 5400 Baden (CH)
(72) Inventor: Andersson, Johan, 06100 Porvoo (FI); Kotilainen, Petri, 06100 Porvoo (FI); Gustafsson, Victor, 06100 Porvoo (FI)
(74) Representative: Kolster Oy Ab

(56) References cited:
- EP-A2- 0 408 514
- DE-B- 1 003 316
- DE-U1- 7 707 997
- FR-A1- 2 738 961
- GB-A- 2 526 766

## Description

### FIELD OF THE INVENTION

The present invention relates to an interconnector element for connecting two electrical installation boxes to each other, and to electrical installation box assemblies comprising at least one electrical installation box and the interconnector element.

It is known in the art to use an interconnector element for connecting two electrical installation boxes to each other such that a distance between centre planes of the connected electrical installation boxes is greater than without the interconnector element. Relevant prior art for mounting two electrical installation boxes at different distances is disclosed in DE1003316B, DE7707997U1, FR2738961A1, EP0408514A2, and GB2526766A.

One of the problems associated with known interconnector elements is that a different type of interconnector element is required for each desired distance between the centre planes.

### BRIEF DESCRIPTION OF THE INVENTION

An object of the present invention is to provide an interconnector element so as to solve the above problem. The objects of the invention are achieved by an interconnector element and electrical installation box assemblies which are characterized by what is stated in the independent claim.

The preferred embodiments of the invention are disclosed in the dependent claims.

The invention is based on the idea of providing an interconnector element with both first connection means and second connection means, wherein the first connection means is adapted to connect a first electrical installation box to a second electrical installation box in a first relative position, and the second connection means is adapted to connect the first electrical installation box to the second electrical installation box in a second relative position in which distance between centre planes of the electrical installation boxes is different from the corresponding distance in the first relative position. In an embodiment the first connection means and the second connection means of the interconnector element are adapted to co-operate with box connection means of the electrical installation boxes, the box connection means being adapted for connecting electrical installation boxes directly to each other.

An interconnector element according to present invention can be provided with attachment means for attaching at least one elongated accessory member to the interconnector element, wherein the at least one elongated accessory member comprises an installation conduit or an electric cable, for example. The idea is that by connecting an interconnector element provided with attachment means to an electrical installation box, it is possible to connect at least one elongated accessory member to the electrical installation box, which would not be possible without the interconnector element. For example, if an electrical installation box is provided with conduit attaching means for attaching an installation conduit having an outer diameter of 16 mm, an installation conduit having an outer diameter of 20 mm can be attached to the electrical installation box by means of an interconnector element comprising an attachment member adapted for attaching an installation conduit having an outer diameter of 20 mm.

An advantage of the interconnector element of the invention is that two electrical installation boxes can be connected to each other in two alternative relative positions by means of one interconnector element. Further, by providing the interconnector element of the invention with the optional attachment means for attaching at least one elongated accessory member to the interconnector element, the interconnector element can replace three or more different type of accessories in connection with mounting electrical installation boxes. Consequently an electrician needs fewer types of accessories when mounting electrical installation boxes.

### BRIEF DESCRIPTION OF THE DRAWINGS

In the following the invention will be described in greater detail by means of preferred embodiments with reference to the attached drawings, in which
Figure 1 shows an interconnector element according to an embodiment of the invention;
Figure 2 shows the interconnector element of Figure 1 from a different direction;
Figure 3 shows an electrical installation box assembly comprising the interconnector element of Figure 1 as an axonometric projection, electrical installation boxes of the assembly being in a first relative position;
Figure 4 shows the electrical installation box assembly of Figure 3 directly from below;
Figure 5 shows an electrical installation box assembly comprising the interconnector element of Figure 1 as an axonometric projection, electrical installation boxes of the assembly being in a second relative position;
Figure 6 shows the electrical installation box assembly of Figure 5 directly from below;
Figure 7 shows an electrical installation box assembly comprising the interconnector element of Figure 1, an electrical installation box, and an installation conduit;
Figure 8 shows a detail of a cross-section of the electrical installation box assembly of Figure 7; and
Figure 9 shows an interconnector element according to another embodiment of the invention.

### DETAILED DESCRIPTION OF THE INVENTION

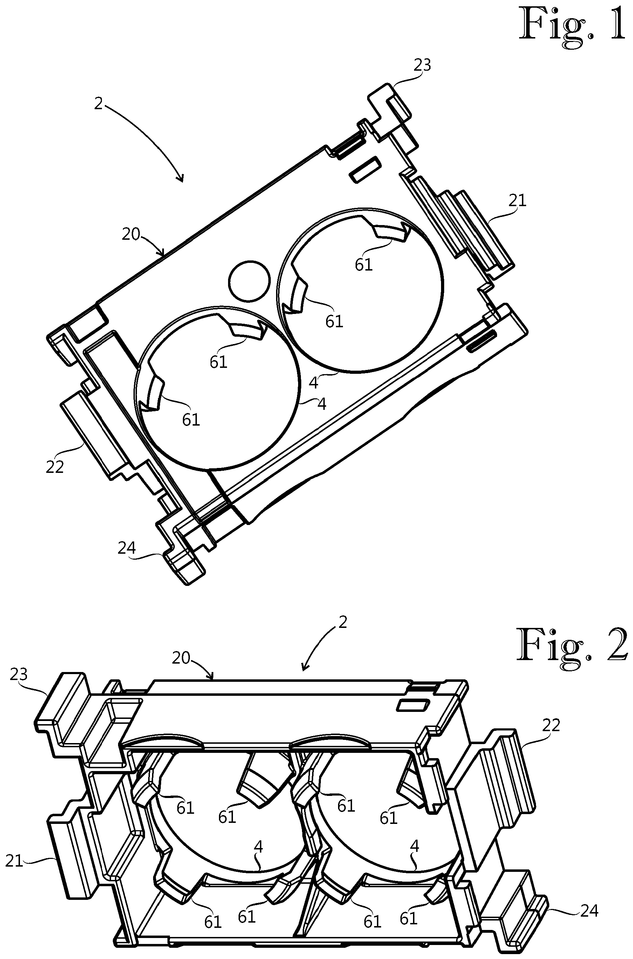

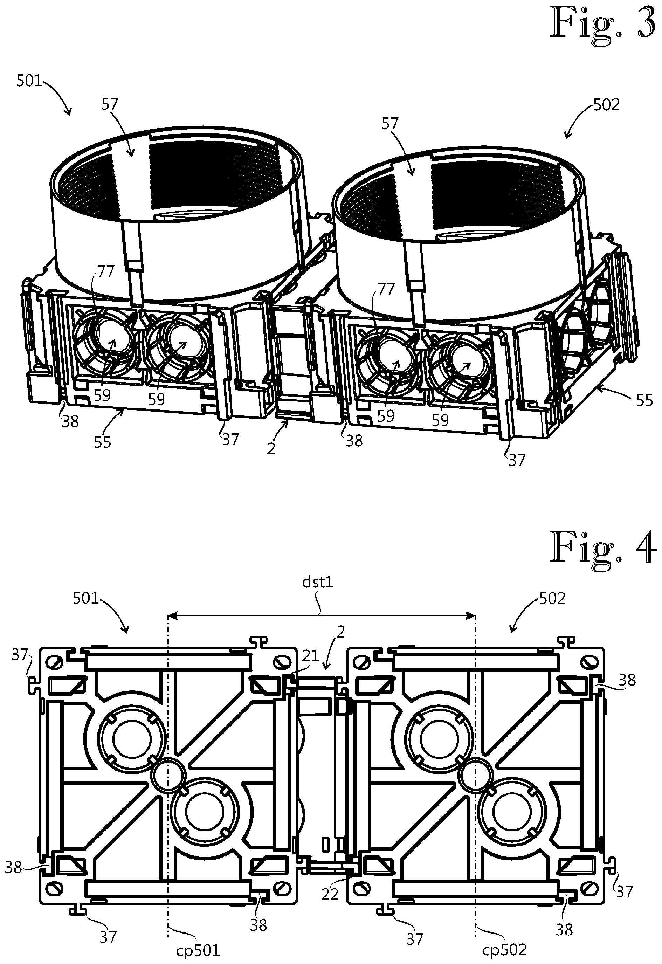

Figures 1 and 2 show an interconnector element 2 from two different directions. Figures 3 and 4 show an electrical installation box assembly in which a first electrical installation box 501 and a second electrical installation box 502 are connected in a first relative position relative to each other with the interconnector element 2.

In the first relative position there is a first distance dst1 between a centre plane cp501 of the first electrical installation box 501 and a centre plane cp502 of the second electrical installation box 502. The first distance dst1 is 85 mm. The first electrical installation box 501 and the second electrical installation box 502 are identical with each other.

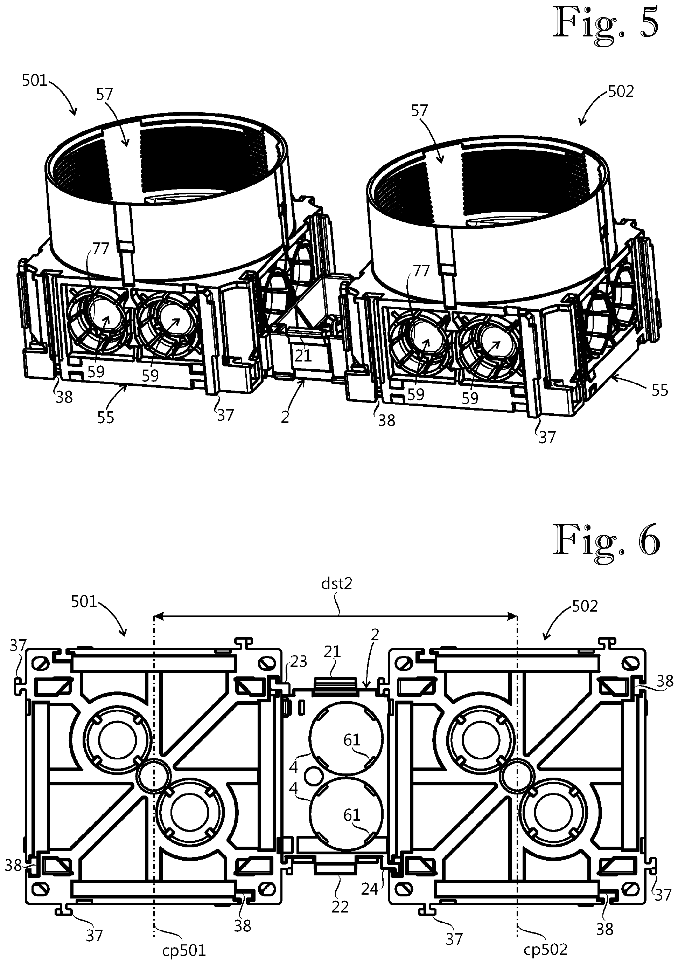

Figures 5 and 6 show an electrical installation box assembly in which the first electrical installation box 501 and the second electrical installation box 502 are connected in a second relative position relative to each other with the interconnector element 2. In the second relative position there is a second distance dst2 between centre planes cp501 and cp502 of the first electrical installation box 501 and the second electrical installation box 502. The second distance dst2 is 100 mm.

A midpoint of the first electrical installation box 501 is located on the centre plane cp501 of the first electrical installation box 501. A midpoint of the second electrical installation box 502 is located on the centre plane cp502 of the second electrical installation box 502. In Figures 4 and 6 the centre plane cp501 of the first electrical installation box 501 and the centre plane cp502 of the second electrical installation box 502 extend perpendicular to the image plane.

Each of the electrical installation boxes 501 and 502 comprises a box case 55 and box connection means for connecting the box case 55 to the box case of the other electrical installation box. The box case 55 defines a mounting space inside thereof, and has a box opening 57 and a plurality of installation apertures 59 adapted to provide a passage between an exterior of the box case 55 and the mounting space.

The box opening 57 is provided on a top surface of the box case 55, and a centre line of the box opening 57 extends in a height direction of the box case 55. In Figures 4 and 6 the image plane is perpendicular to the height direction.

The box opening 57 is adapted for introducing an electrical component such as a wall socket or a light switch into the mounting space which is adapted to accommodate the electrical component. The installation apertures 59 are provided on side walls of the box case 55, and a centre line of each installation aperture 59 extends perpendicular to the height direction. Each installation aperture 59 is adapted for introducing an end of an electric wire to the mounting space from outside of the electrical installation box. Surface area of the box opening 57 is multifold compared with surface area of each installation aperture 59.

The centre plane cp501 divides the mounting space of the first electrical installation box 501 into two equal spaces. Similarly, the centre plane cp502 divides the mounting space of the second electrical installation box 502 into two equal spaces. The centre plane of each of the electrical installation boxes 501 and 502 is parallel to two side walls of the corresponding box case 55.

Referring to Figures 1 and 2, the interconnector element 2 comprises first connection means, second connection means, two passage apertures 4 and attachment means provided in a body part 20 of the interconnector element 2. The body part 20 has a first dimension extending in a first direction, a second dimension extending in a second direction, and a third dimension extending in a third direction, the first direction, the second direction and the third direction being perpendicular to each other.

The first dimension is approximately the same as a distance between the first electrical installation box 501 and the second electrical installation box 502 in the first relative position shown in Figures 3 and 4. The second dimension is approximately the same as a distance between the first electrical installation box 501 and the second electrical installation box 502 in the second relative position shown in Figures 5 and 6. In Figure 4 the first direction is horizontal direction, the second direction is perpendicular to the image plane, and the third direction is vertical direction. In Figure 4 the first distance dst1 is parallel to the first direction. In Figure 6 the second distance dst2 is parallel to the second direction.

The first connection means is adapted to connect the first electrical installation box 501 to the second electrical installation box 502 in the first relative position shown in Figures 3 and 4. The first connection means comprises a first connector member 21 for co-operating with the first electrical installation box 501, and a second connector member 22 for co-operating with the second electrical installation box 502.

The second connection means is adapted to connect the first electrical installation box 501 to the second electrical installation box 502 in the second relative position shown in Figures 5 and 6. The second connection means comprises a third connector member 23 for co-operating with the first electrical installation box 501, and a fourth connector member 24 for co-operating with the second electrical installation box 502.

Each of the passage apertures 4 is adapted to provide a passage for electric wires through the body part 20 and into an electrical installation box while the interconnector element 2 is connected to the electrical installation box with the first connection means. A centre line of each of the passage apertures 4 extends in the first direction.

The attachment means of the interconnector element 2 comprises eight first type attachment members 61, four for each passage aperture 4. The first type attachment members 61 are adapted for attaching a first type installation conduit to the corresponding passage aperture 4. The first type installation conduit has a first outer diameter and comprises a plurality of peripheral grooves on an outer surface thereof. The first type attachment member 61 is adapted to enter at least partially a peripheral groove on the outer surface of the first type installation conduit.

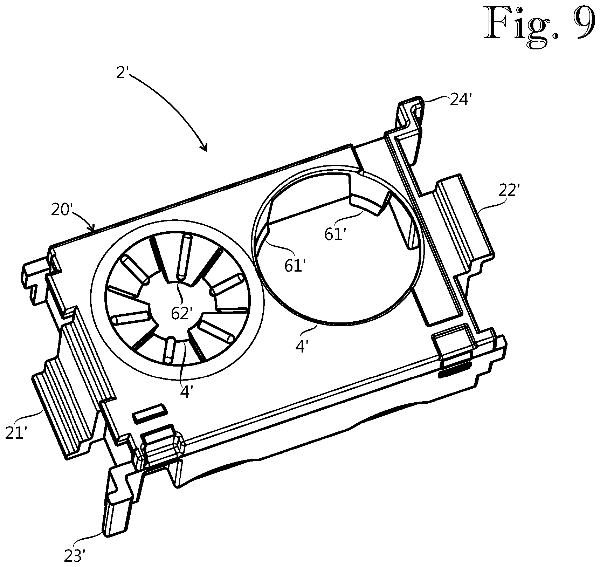

In an alternative embodiment an interconnector element comprises attachment means for attaching an elongated accessory member to a passage aperture of the interconnector element, the elongated accessory member being other than an installation conduit. For example, Figure 9 shows an interconnector element 2' whose attachment means comprises four first type attachment members 61' for one passage aperture 4', and a second type attachment member 62' for the other passage aperture 4'. The second type attachment member 62' comprises six protrusions extending from an edge of the passage aperture 4' towards a centre of the passage aperture 4'. The second type attachment member 62' is adapted for attaching an electric cable to the passage aperture 4'. In other words, the second type attachment member 62' is adapted to function as a cable clamp. Both the first type attachment member 61' and the second type attachment member 62' are flexible members.

The first electrical installation box 501 and the second electrical installation box 502 are electrical installation boxes of a first type, wherein the box case 55 of each electrical installation box 501 and 502 has a base portion whose cross section is substantially a square, and the box connection means of each of the electrical installation boxes 501 and 502 comprises projections 37 and slots 38. The box connection means of the first electrical installation box 501 and the second electrical installation box 502 enable connecting the first electrical installation box 501 directly to the second electrical installation box 502.

Cross sections of the projections 37 and the slots 38 are T-shaped, and they are adapted to co-operate with each other. The projections 37 and the slots 38 extend parallel to the height direction of the corresponding box case 55. Each side of the base portion is provided with one projection 37 and one slot 38.

The electrical installation box assembly of Figure 3 is adapted to be assembled such that the first connector member 21 is slid into a corresponding slot 38 of the first electrical installation box 501 in the height direction, and the second connector member 22 is slid into a corresponding slot 38 of the second electrical installation box 502 in the height direction. The electrical installation box assembly of Figure 5 is adapted to be assembled such that the third connector member 23 is slid into a corresponding slot 38 of the first electrical installation box 501 in the height direction, and the fourth connector member 24 is slid into a corresponding slot 38 of the second electrical installation box 502 in the height direction.

Figures 1 and 2 show that each of the first connector member 21, the second connector member 22, the third connector member 23 and the fourth connector member 24 has an L-shaped cross section. Each of the first connector member 21, the second connector member 22, the third connector member 23 and the fourth connector member 24 is adapted to co-operate with a corresponding slot 38 in order to prevent relative movement between the interconnector element 2 and corresponding electrical installation box in a direction perpendicular to the height direction of the electrical installation box. For example, in Figure 4 co-operation between the first connector member 21 and a slot 38 in the first electrical installation box 501, and co-operation between the second connector member 22 and a slot 38 in the second electrical installation box 502 prevents the electrical installation boxes 501 and 502 from receding from each other. In an alternative embodiment the first connector member, the second connector member, the third connector member and the fourth connector member has a cross section whose shape is similar to the shape of cross section of slots provided in the first and second electrical installation boxes.

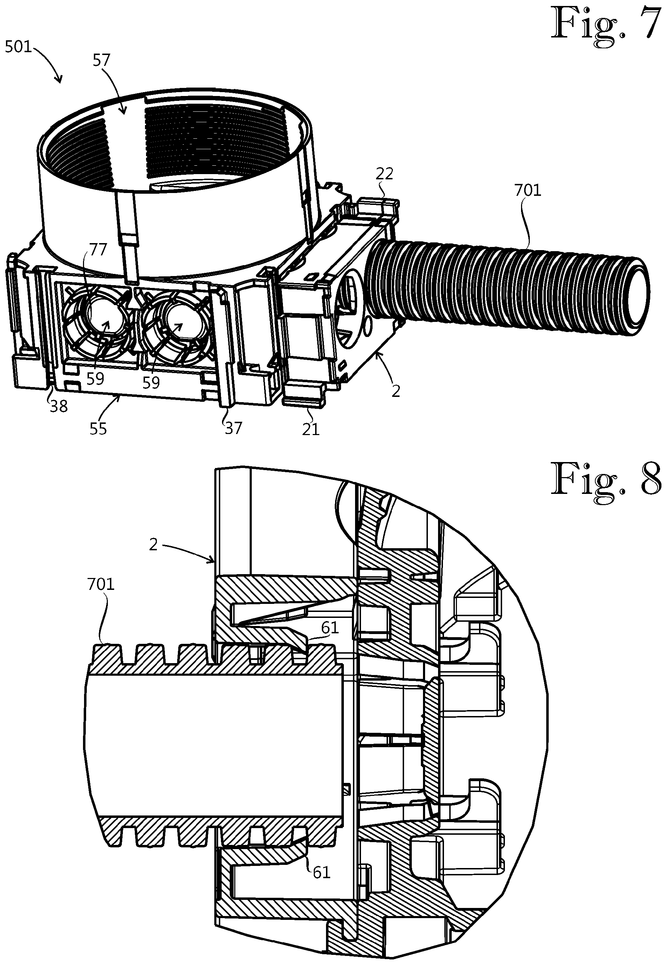

Figure 7 illustrates an electrical installation box assembly in which a first type installation conduit 701 is attached to the first electrical installation box 501 by means of the interconnector element 2. An outer diameter of the first type installation conduit 701 is 20 mm. The cox case 55 of the first electrical installation box 501 has conduit attaching means 77 for attaching a second type installation conduit to the box case 55, an outer diameter of the second type installation conduit is 16 mm.

Figure 8 shows a detail of a cross-section of the electrical installation box assembly of Figure 7. Figure 8 illustrates how the first type attachment members 61 have entered partially a peripheral groove on an outer surface of the first type installation conduit 701, thereby preventing detachment of the first type installation conduit 701 from the interconnector element 2.

The first electrical installation box 501, the second electrical installation box 502 and the interconnector element 2 are made of plastic material. In an embodiment the first electrical installation box, the second electrical installation box and the interconnector element are made of the same plastic material.

It will be obvious to a person skilled in the art that the inventive concept can be implemented in various ways. The invention and its embodiments are not limited to the examples described above but may vary within the scope of the claims.

## Claims

1. An interconnector element for connecting two electrical installation boxes (501, 502) to each other, the interconnector element (2) comprising:
a body part (20) having a first dimension extending in a first direction, a second dimension extending in a second direction, and a third dimension extending in a third direction, the first direction, the second direction and the third direction being perpendicular to each other; and
first connection means provided in the body part (20), and adapted to connect a first electrical installation box (501) to a second electrical installation box (502) in a first relative position in which there is a first distance (dst1) between centre planes (cp501, cp502) of the first electrical installation box (501) and the second electrical installation box (502), the first distance (dst1) being parallel to the first direction, the first connection means comprising a first connector member (21) adapted for co-operating with box connection means of the first electrical installation box (501), and a second connector member (22) adapted for co-operating with box connection means of the second electrical installation box (502),
**characterized in that** the interconnector element (2) comprises second connection means provided in the body part (20), and adapted to connect the first electrical installation box (501) to the second electrical installation box (502) in a second relative position in which there is a second distance (dst2) between centre planes (cp501, cp502) of the first electrical installation box (501) and the second electrical installation box (502), the second distance (dst2) being parallel to the second direction, the second connection means comprising a third connector member (23) adapted for co-operating with the box connection means of the first electrical installation box (501), and a fourth connector member (24) adapted for co-operating with the box connection means of the second electrical installation box (502), the second distance (dst2) being unequal to the first distance (dst1).

2. An interconnector element according to claim 1, **characterized in that** the body part (20) of the interconnector element (2) is provided with at least one passage aperture (4) adapted to provide a passage for electric wires through the body part (20) and into the first electrical installation box (501) while the interconnector element (2) is connected to the first electrical installation box (501) with the first connection means, the at least one passage aperture (4) extending through the body part (20) in the first direction.

3. An interconnector element according to claim 2, **characterized in that** the body part (20) of the interconnector element (2) is provided with attachment means for attaching at least one elongated accessory member to the at least one passage aperture (4).

4. An interconnector element according to claim 3, **characterized in that** the attachment means comprises a first type attachment member (61) adapted for attaching a first type installation conduit (701) to a passage aperture (4) of the body part (20), the first type installation conduit (701) having a first outer diameter and comprising a plurality of peripheral grooves on an outer surface thereof, the first type attachment member (61) being adapted to enter at least partially a peripheral groove on the outer surface of the first type installation conduit (701).

5. An interconnector element according to claim 3 or 4, **characterized in that** the attachment means comprises a second type attachment member (62') adapted for attaching an electric cable to a passage aperture (4') of the body part (20'), wherein the second type attachment member (62') is adapted to function as a cable clamp.

6. An electrical installation box assembly comprising:
a first electrical installation box (501) comprising a box case (55) having conduit attaching means (77) for attaching an installation conduit to the box case (55), the installation conduit comprising a plurality of peripheral grooves on an outer surface thereof; and
an interconnector element,
**characterized in that** the interconnector element is an interconnector element (2) according to claim 4, and the conduit attaching means (77) of the first electrical installation box (501) is adapted for attaching a second type installation conduit to the box case (55), the second type installation conduit having a second outer diameter unequal to the first outer diameter.

7. An electrical installation box assembly comprising a first electrical installation box (501), a second electrical installation box (502), and an interconnector element for connecting the first electrical installation box (501) to the second electrical installation box (502), each of the electrical installation boxes (501, 502) comprising a box case (55) and box connection means for connecting the box case (55) to a box case of the other electrical installation box, the box case (55) defining a mounting space inside thereof, and having a box opening (57) and a plurality of installation apertures (59) adapted to provide a passage between an exterior of the box case (55) and the mounting space, a centre line of the box opening (57) extending in a height direction of the box case (55), the box opening (57) being adapted for introducing an electrical component such as a wall socket or a light switch into the mounting space, and a centre line of each installation aperture (59) extending perpendicular to the height direction of the box case (55), and each installation aperture (59) being adapted for introducing an end of an electric wire to the mounting space,
**characterized in that** the interconnector element is an interconnector element (2) according to any one of claims 1 to 5, wherein the first connection means and the second connection means of the interconnector element (2) are adapted to co-operate with the box connection means of the electrical installation boxes (501, 502).

8. An electrical installation box assembly according to claim 7, **characterized in that** the box connection means of each of the electrical installation boxes (501, 502) comprises projections (37) and slots (38), wherein cross sections of the projections (37) and slots (38) are adapted to co-operate with each other, and the projections (37) and the slots (38) extend parallel to the height direction of the box case (55).

9. An electrical installation box assembly according to claim 8, **characterized in that** the box case (55) of each electrical installation box (501, 502) has a base portion whose cross section is substantially a square, and each side of the square is provided with one of the projections (37) and one of the slots (38).

10. An electrical installation box assembly according to any one of claims 7 - 9, **characterized in that** the first electrical installation box (501) the second electrical installation box (502) are identical with each other.

## Patentansprüche

1. Verbindungselement zum Verbinden zweier Elektroinstallationsdosen (501, 502) miteinander, wobei das Verbindungselement (2) umfasst:
einen Hauptteil (20) mit einer ersten Abmessung, die sich in eine erste Richtung erstreckt, einer zweiten Abmessung, die sich in eine zweite Richtung erstreckt, und einer dritten Abmessung, die sich in eine dritte Richtung erstreckt, wobei die erste Richtung, die zweite Richtung und die dritte Richtung senkrecht zueinander liegen, und
ein erstes Verbindungsmittel, das in dem Hauptteil (20) bereitgestellt und dafür eingerichtet ist, eine erste Elektroinstallationsdose (501) mit einer zweiten Elektroinstallationsdose (502) in einer ersten relativen Position zu verbinden, in der zwischen Mittelebenen (cp501, cp502) der ersten Elektroinstallationsdose (501) und der zweiten Elektroinstallationsdose (502) ein erster Abstand (dst1) besteht, wobei der erste Abstand (dst1) parallel zur ersten Richtung liegt, wobei das erste Verbindungsmittel ein erstes Verbindungglied (21) umfasst, das dafür eingerichtet ist, mit Dosenverbindungsmitteln der ersten Elektroinstallationsdose (501) zusammenzuwirken, und ein zweites Verbindungsglied (22), das dafür eingerichtet ist, mit Dosenverbindungsmitteln der zweiten Elektroinstallationsdose (502) zusammenzuwirken,
**dadurch gekennzeichnet, dass** das Verbindungselement (2) ein zweites Verbindungsmittel umfasst, das in dem Hauptteil (20) bereitgestellt und dafür eingerichtet ist, die erste Elektroinstallationsdose (501) mit der zweiten Elektroinstallationsdose (502) in einer zweiten relativen Position zu verbinden, in der zwischen Mittelebenen (cp501, cp502) der ersten Elektroinstallationsdose (501) und der zweiten Elektroinstallationsdose (502) ein zweiter Abstand (dst2) besteht, wobei der zweite Abstand (dst2) parallel zur zweiten Richtung liegt, wobei das zweite Verbindungsmittel ein drittes Verbindungsglied (23) umfasst, das dafür eingerichtet ist, mit den Dosenverbindungsmitteln der ersten Elektroinstallationsdose (501) zusammenzuwirken, und ein viertes Verbindungsglied (24), das dafür eingerichtet ist, mit den Dosenverbindungsmitteln der zweiten Elektroinstallationsdose (502) zusammenzuwirken, wobei der zweite Abstand (dst2) ungleich dem ersten Abstand (dst1) ist.

2. Verbindungselement nach Anspruch 1, **dadurch gekennzeichnet, dass** der Hauptteil (20) des Verbindungselements (2) mit mindestens einer Durchlassöffnung (4) versehen ist, die dafür eingerichtet ist, einen Durchlass für elektrische Drähte durch den Hauptteil (20) und in die erste Elektroinstallationsdose (501) bereitzustellen, während das Verbindungselement (2) mit der ersten Elektroinstallationsdose (501) mit dem ersten Verbindungsmittel verbunden ist, wobei sich die mindestens eine Durchlassöffnung (4) in der ersten Richtung durch den Hauptteil (20) erstreckt.

3. Verbindungselement nach Anspruch 2, **dadurch gekennzeichnet, dass** der Hauptteil (20) des Verbindungselements (2) mit einem Anbringungsmittel zum Anbringen mindestens eines länglichen Zubehörgliedes an der mindestens einen Durchlassöffnung (4) umfasst.

4. Verbindungselement nach Anspruch 3, **dadurch gekennzeichnet, dass** das Anbringungsmittel ein Anbringungsglied (61) einer ersten Art umfasst, das zum Anbringen einer Installationsleitung (701) einer ersten Art an einer Durchlassöffnung (4) des Hauptteils (20) eingerichtet ist, wobei die Installationsleitung (701) einer ersten Art einen ersten Außendurchmesser aufweist und an ihrer Außenseite mehrere periphere Rillen umfasst, wobei das Anbringungsglied (61) einer ersten Art dafür eingerichtet ist, zumindest teilweise in eine periphere Rille an der Außenseite der Installationsleitung (701) einer ersten Art einzudringen.

5. Verbindungselement nach Anspruch 3 oder 4, **dadurch gekennzeichnet, dass** das Anbringungsmittel ein Anbringungsglied (62') einer zweiten Art umfasst, das zum Anbringen eines Elektrokabels an einer Durchlassöffnung (4') des Hauptteils (20') eingerichtet ist, wobei das Anbringungsglied (62') einer zweiten Art dafür eingerichtet ist, als eine Kabelklemme zu fungieren.

6. Elektroinstallationsdosenanordnung, umfassend:
eine erste Elektroinstallationsdose (501), die ein Dosengehäuse (55) umfasst, das ein Leitungsanbringungsmittel (77) zum Anbringen einer Installationsleitung an dem Dosengehäuse (55) aufweist, wobei die Installationsleitung an ihrer Außenseite mehrere periphere Rillen umfasst, und
ein Verbindungselement,
**dadurch gekennzeichnet, dass** das Verbindungselement ein Verbindungselement (2) nach Anspruch 4 ist und das Leitungsanbringungsmittel (77) der ersten Elektroinstallationsdose (501) zum Anbringen einer Installationsleitung einer zweiten Art an dem Dosengehäuse (55) eingerichtet ist, wobei die Installationsleitung einer zweiten Art einen zweiten Außendurchmesser aufweist, der ungleich dem ersten Außendurchmesser ist.

7. Elektroinstallationsdosenanordnung, eine erste Elektroinstallationsdose (501), eine zweite Elektroinstallationsdose (502) und ein Verbindungselement zum Verbinden der ersten Elektroinstallationsdose (501) mit der zweiten Elektroinstallationsdose (502) umfassend, wobei jede der Elektroinstallationsdosen (501, 502) ein Dosengehäuse (55) und Dosenverbindungsmittel zum Verbinden des Dosengehäuses (55) mit einem Dosengehäuse der anderen Elektroinstallationsdose umfasst, wobei das Dosengehäuse (55) in seinem Inneren einen Montageraum definiert und eine Dosenöffnung (57) und mehrere Installationsöffnungen (59) aufweist, die dafür eingerichtet sind, einen Durchlassweg zwischen einem Äußeren des Dosengehäuses (55) und dem Montageraum bereitzustellen, wobei sich eine Mittellinie der Dosenöffnung (57) in einer Höherichtung des Dosengehäuses (55) erstreckt, wobei die Dosenöffnung (57) für das Einsetzen einer elektrischen Komponente, wie etwa einer Steckdose oder eines Lichtschalters, in den Montageraum eingerichtet ist und sich eine Mittellinie jeder Installationsöffnung (59) senkrecht zu der Höherichtung des Dosengehäuses (55) erstreckt und wobei jede Installationsöffnung (59) für das Einsetzen eines Endes eines elektrischen Drahtes in den Montageraum eingerichtet ist,
**dadurch gekennzeichnet, dass** das Verbindungselement ein Verbindungselement (2) nach einem der Ansprüche 1 bis 5 ist, wobei das erste Verbindungsmittel und das zweite Verbindungsmittel des Verbindungselements (2) dafür eingerichtet sind, mit den Dosenverbindungsmitteln der Elektroinstallationsdosen (501, 502) zusammenzuwirken.

8. Elektroinstallationsdosenanordnung nach Anspruch 7, **dadurch gekennzeichnet, dass** das Dosenverbindungsmittel jeder der Elektroinstallationsdosen (501, 502) Vorsprünge (37) und Schlitze (38) umfasst, wobei Querschnitte der Vorsprünge (37) und Schlitze (38) dafür eingerichtet sind zusammenzuwirken, und sich die Vorsprünge (37) und Schlitze (38) parallel zur Höherichtung des Dosengehäuses (55) erstrecken.

9. Elektroinstallationsdosenanordnung nach Anspruch 8, **dadurch gekennzeichnet, dass** das Dosengehäuse (55) jeder Elektroinstallationsdose (501, 502) einen Basisabschnitt aufweist, dessen Querschnitt im Wesentlichen ein Viereck ist und jede Seite des Vierecks mit einem der Vorsprünge (37) und einem der Schlitze (38) versehen ist.

10. Elektroinstallationsdosenanordnung nach einem der Ansprüche 7 bis 9, **dadurch gekennzeichnet, dass** die erste Elektroinstallationsdose (501) und die zweite Elektroinstallationsdose (502) identisch sind.

## Revendications

1. Élément interconnecteur destiné à lier deux boîtes (501, 502) d'installation électrique l'une à l'autre, l'élément interconnecteur (2) comportant :
une partie (20) de corps présentant une première dimension s'étendant dans une première direction, une deuxième dimension s'étendant dans une deuxième direction, et une troisième dimension s'étendant dans une troisième direction, la première direction, la deuxième direction et la troisième direction étant perpendiculaires l'une à l'autre ; et
un premier moyen de liaison placé dans la partie (20) de corps, et prévu pour lier une première boîte (501) d'installation électrique à une deuxième boîte (502) d'installation électrique dans une première position relative où il existe une première distance (dst1) entre des plans médians (cp501, cp502) de la première boîte (501) d'installation électrique et de la deuxième boîte (502) d'installation électrique, la première distance (dst1) étant parallèle à la première direction,
le premier moyen de liaison comportant un premier organe connecteur (21) prévu pour coopérer avec un moyen de liaison de boîtes de la première boîte (501) d'installation électrique, et un deuxième organe connecteur (22) prévu pour coopérer avec un moyen de liaison de boîtes de la deuxième boîte (502) d'installation électrique,
**caractérisé en ce que** l'élément interconnecteur (2) comporte un deuxième moyen de liaison placé dans la partie (20) de corps, et prévu pour lier la première boîte (501) d'installation électrique à la deuxième boîte (502) d'installation électrique dans une deuxième position relative où il existe une deuxième distance (dst2) entre des plans médians (cp501, cp502) de la première boîte (501) d'installation électrique et de la deuxième boîte (502) d'installation électrique, la deuxième distance (dst2) étant parallèle à la deuxième direction, le deuxième moyen de liaison comportant un troisième organe connecteur (23) prévu pour coopérer avec le moyen de liaison de boîtes de la première boîte (501) d'installation électrique, et un quatrième organe connecteur (24) prévu pour coopérer avec le moyen de liaison de boîtes de la deuxième boîte (502) d'installation électrique, la deuxième distance (dst2) n'étant pas égale à la première distance (dst1).

2. Élément interconnecteur selon la revendication 1, **caractérisé en ce que** la partie (20) de corps de l'élément interconnecteur (2) est munie d'au moins un orifice (4) de passage prévu pour ménager un passage destiné à des fils électriques à travers la partie (20) de corps et jusque dans la première boîte (501) d'installation électrique tandis que l'élément interconnecteur (2) est lié à la première boîte (501) d'installation électrique à l'aide du premier moyen de liaison, l'orifice ou les orifices (4) de passage s'étendant à travers la partie (20) de corps dans la première direction.

3. Élément interconnecteur selon la revendication 2, **caractérisé en ce que** la partie (20) de corps de l'élément interconnecteur (2) est munie d'un moyen de fixation servant à fixer au moins un organe d'accessoire allongé à l'orifice ou aux orifices (4) de passage.

4. Élément interconnecteur selon la revendication 3, **caractérisé en ce que** le moyen de fixation comporte un organe (61) de fixation d'un premier type prévu pour fixer un conduit (701) d'installation d'un premier type à un orifice (4) de passage de la partie (20) de corps, le conduit (701) d'installation du premier type présentant un premier diamètre extérieur et comportant une pluralité de rainures périphériques sur une surface extérieure de celui-ci, l'organe (61) de fixation du premier type étant prévu pour pénétrer au moins partiellement dans une rainure périphérique sur la surface extérieure du conduit (701) d'installation du premier type.

5. Élément interconnecteur selon la revendication 3 ou 4, **caractérisé en ce que** le moyen de fixation comporte un organe (62') de fixation d'un deuxième type prévu pour fixer un câble électrique à un orifice (4') de passage de la partie (20') de corps, l'organe (62') de fixation du deuxième type étant prévu pour faire fonction de pince pour câble.

6. Ensemble de boîtes d'installation électrique comportant :
une première boîte (501) d'installation électrique comportant un caisson (55) de boîte doté d'un moyen (77) de fixation de conduit destiné à fixer un conduit d'installation au caisson (55) de boîte, le conduit d'installation comportant une pluralité de rainures périphériques sur une surface extérieure de celui-ci ; et
un élément interconnecteur,
**caractérisé en ce que** l'élément interconnecteur est un élément interconnecteur (2) selon la revendication 4, et **en ce que** le moyen (77) de fixation de conduit de la première boîte (501) d'installation électrique est prévu pour fixer un conduit d'installation d'un deuxième type au caisson (55) de boîte, le conduit d'installation du deuxième type présentant un deuxième diamètre extérieur qui n'est pas égal au premier diamètre extérieur.

7. Ensemble de boîtes d'installation électrique comportant une première boîte (501) d'installation électrique, une deuxième boîte (502) d'installation électrique, et un élément interconnecteur destiné à lier la première boîte (501) d'installation électrique à la deuxième boîte (502) d'installation électrique, chacune des boîtes (501, 502) d'installation électrique comportant un caisson (55) de boîte et un moyen de liaison de boîtes destiné à lier le caisson (55) de boîte à un caisson de boîte de l'autre boîte d'installation électrique, le caisson (55) de boîte définissant un espace de montage à l'intérieur de celui-ci, et présentant une ouverture (57) de boîte et une pluralité d'orifices (59) d'installation prévus pour ménager un passage entre un extérieur du caisson (55) de boîte et l'espace de montage, une ligne médiane de l'ouverture (57) de boîte s'étendant dans une direction de hauteur du caisson (55) de boîte, l'ouverture (57) de boîte étant prévue pour introduire un composant électrique tel qu'une prise murale ou un interrupteur d'éclairage dans l'espace de montage, et une ligne médiane de chaque orifice (59) d'installation s'étendant perpendiculairement à la direction de hauteur du caisson (55) de boîte, et chaque orifice (59) d'installation étant prévu pour introduire une extrémité d'un fil électrique dans l'espace de montage, **caractérisé en ce que** l'élément interconnecteur est un élément interconnecteur (2) selon l'une quelconque des revendications 1 à 5, le premier moyen de liaison et le deuxième moyen de liaison de l'élément interconnecteur (2) étant prévus pour coopérer avec les moyens de liaison de boîtes des boîtes (501, 502) d'installation électrique.

8. Ensemble de boîtes d'installation électrique selon la revendication 7, **caractérisé en ce que** le moyen de liaison de boîtes de chacune des boîtes (501, 502) d'installation électrique comporte des protubérances (37) et des évidements (38), des sections droites des protubérances (37) et des évidements (38) étant prévues pour coopérer entre elles, et les protubérances (37) et les évidements (38) s'étendant parallèlement à la direction de hauteur du caisson (55) de boîte.

9. Ensemble de boîtes d'installation électrique selon la revendication 8, **caractérisé en ce que** le caisson (55) de boîte de chaque boîte (501, 502) d'installation électrique est doté d'une partie de base dont la section droite est sensiblement un carré, et **en ce que** chaque côté du carré est muni d'une des protubérances (37) et d'un des évidements (38).

10. Ensemble de boîtes d'installation électrique selon l'une quelconque des revendications 7 à 9, **caractérisé en ce que** la première boîte (501) d'installation électrique et la deuxième boîte (502) d'installation électrique sont identiques entre elles.
